# EUROPÄISCHE PATENTSCHRIFT

(11) **EP 3 739 479 B1**
(45) Veröffentlichungstag und Bekanntmachung des Hinweises auf die Patenterteilung: **11.08.2021**
(21) Anmeldenummer: 19174383.0
(22) Anmeldetag: 14.05.2019
(51) Int. Cl.: G06F 11/36, G06F 30/34

(54) **VERFAHREN ZUR FEHLERSUCHE IN DER PROGRAMMLOGIK EINES SYSTEMS VERTEILTER PROGRAMMIERBARER GATTERANORDNUNGEN**
METHOD FOR DETECTING ERRORS IN THE PROGRAM LOGIC OF A SYSTEM OF DISTRIBUTED PROGRAMMABLE GATE ASSEMBLIES
PROCÉDÉ DE DÉPANNAGE DANS LA LOGIQUE DE PROGRAMME D'UN SYSTÈME DU RÉSEAU PROGRAMMABLE DE PORTES DISTRIBUÉ

(43) Veröffentlichungstag der Anmeldung: 18.11.2020
(73) Patentinhaber: dSPACE digital signal processing and control engineering GmbH, 33102 Paderborn (DE)
(72) Erfinder: Lubeley, Dominik, 33102 Paderborn (DE); Kalte, Heiko, 33102 Paderborn (DE); Schlenger, Marc, 33102 Paderborn (DE)

(56) Entgegenhaltungen:
- GRAHAM P ET AL: "Instrumenting Bitstreams for Debugging FPGA Circuits", FIELD-PROGRAMMABLE CUSTOM COMPUTING MACHINES, 2001. FCCM '01. THE 9TH ANNUAL IEEE SYMPOSIUM ON ROHNERT PARK, CA, USA 29-02 APRIL 2001, PISCATAWAY, NJ, USA,IEEE, 29. April 2001 (2001-04-29), Seiten 41-50, XP010789103, ISBN: 978-0-7695-2667-6
- Neal Stollon: "Multiprocessor Debugging" In: "On-Chip Instrumentation", 23. Oktober 2010 (2010-10-23), Springer US, Boston, MA, XP055634215, ISBN: 978-1-4419-7563-8 Seiten 109-115, DOI: 10.1007/978-1-4419-7563-8_7, * Seite 109 * * Seiten 111,112 *
- LIM ROMAN ET AL: "FlockLab: A testbed for distributed, synchronized tracing and profiling of wireless embedded systems", 2013 ACM/IEEE INTERNATIONAL CONFERENCE ON INFORMATION PROCESSING IN SENSOR NETWORKS (IPSN), ACM, 8. April 2013 (2013-04-08), Seiten 153-165, XP032655984, DOI: 10.1109/IPSN.2013.6917582 [gefunden am 2014-10-07]

## Beschreibung

Die Erfindung betrifft das Debugging verteilter Computersysteme.

Verteilte Computersysteme zeichnen sich dadurch aus, dass sie mindestens zwei räumlich voneinander getrennte, aber durch Datenkommunikation miteinander verbundene Recheneinheiten umfassen, um durch die Verteilung der Rechenlast auf die vorhandenen Recheneinheiten eine höhere Rechenleistung zu verwirklichen, als eine einzige Recheneinheit sie leisten könnte. Ein einfaches Beispiel ist ein handelsüblicher PC mit einer Grafikkarte, auf der ein Grafikprozessor verbaut ist, der zur Entlastung des Hauptprozessors die Berechnung des auf dem Monitor darzustellenden Bildes übernimmt. Der Stand der Technik umfasst aber auch komplexere Computersysteme mit einer Vielzahl parallel arbeitender Recheneinheiten. Ein Beispiel sind Hardware-in-the-Loop-Simulatoren (HILs) zur Emulation einer Arbeitsumgebung eines elektronischen Steuergeräts (ECU, *Electronic Control Unit*). Diese werden eingesetzt, um Steuergeräte in einer weitgehend virtuellen Umgebung gefahrlos und unter reproduzierbaren Bedingungen zu testen und zu entwickeln.

Als verwendete Recheneinheiten sind, neben den befehlsbasiert arbeitenden Prozessoren, auch programmierbare Gatteranordnungen verbreitet. Diese zeichnen sich im Allgemeinen durch eine Vielzahl logischer Einheiten aus, jede ein oder mehrere Logikgatter umfassend, deren Funktionalität und Verschaltung untereinander durch Programmierung änderbar ist. Handelsübliche programmierbare Gatteranordnungen, insbesondere FPGAs (*Field Programmable Gate Arrays*), umfassen neben den logischen Einheiten auch andere Ressourcen, die wie die logischen Einheiten verschaltbar und in die Programmlogik einbindbar sind, beispielsweise RAM-Blöcke, Register oder integrierte Signalprozessoren.

Ein besonderer Vorteil programmierbarer Gatteranordnungen ist ihre Fähigkeit, auf einer einzigen Recheneinheit viele Rechen- oder Logikoperation parallel durchzuführen. Die im gegenwärtigen Stand der Technik komplexesten und dadurch leistungsfähigsten programmierbaren Gatteranordnungen sind FPGAs. Weitere Beispiele sind CPLDs (*Complex Programmable Logic Devices*) und PALs (*Programmable Array Logics*).

Tritt in der Programmlogik eines eigentlich fertig aufgesetzten verteilten Computersystems ein Fehler auf, dann ist die Suche nach diesem eine zeitaufwendige Aufgabe, weil im Allgemeinen das System in seiner Gesamtheit zu betrachten ist. Da die Recheneinheiten parallel arbeiten und dabei Daten austauschen, kann die Ursache eines in einer Recheneinheit auftretenden Fehlers in einer anderen Recheneinheit liegen. Die zur Untersuchung des Fehlers durchgeführten Lesezugriffe müssen zwischen den Recheneinheiten zeitsynchronisiert sein, um die ausgelesenen Werte sinnvoll zueinander in Beziehung setzen zu können.

Noch aufwendiger ist die Fehlersuche, wenn das verteilte System Recheneinheiten in Form programmierbarer Gatteranordnungen umfasst, da deren Programmlogik nicht auf einer iterativen Abarbeitung von Maschinenbefehlen basiert, sondern in Form eines integrierten Schaltkreises hart verdrahtet ist. Der gegenwärtig übliche Ansatz besteht darin, auf einer programmierbaren Gatteranordnung, auf der ein Fehler vermutet wird, nachträglich eine Überwachungsschaltung, einen sogenannten *Debug Core,* zu programmieren. Dessen nachträgliche Programmierung bedingt aber eine Neuberechnung des gesamten Designs der programmierbaren Gatteranordnung, die nicht nur viel Zeit kostet, sondern auch die Reproduzierbarkeit des Fehlers beeinflussen kann. Außerdem setzt eine Neuprogrammierung auch den Zustand der auf der Gatteranordnung programmierten Programmlogik zurück. Bei einem selten auftretenden Fehler kann das bedeuten, dass man eine lange Zeit auf ein erneutes Auftreten des Fehlers warten muss.

Zusammenfassend ausgedrückt führt die Fehlersuche in der Programmlogik verteilter Systeme programmierbarer Gatteranordnung häufig zu langen Stillstandszeiten und hoher personeller Ressourcenbindung. Vor diesem Hintergrund ist es die Aufgabe der Erfindung, die Fehlersuche in derartigen Systemen zu vereinfachen.

Aus dem Aufsatz "FlockLab: A testbed for distributed, synchronized tracing and profiling of wireless embedded systems" von Roman Lim et al., ACM/IEEE International Conference on Information Processing in Sensor Networks (2013), ist ein Testwerkzeug zur parallelen, synchronisierten Fehlersuche in verteilten Computersystemen bekannt.

Das Lehrbuch "Multiprocessor Debugging" von Neal Stollon (ISBN: 978-1-4419-7563-8) offenbart auf Seite 109 ein verteiltes Computersystem, in dem Signale in verschiedenen, verteilten Recheneinheiten des Computersystems zeitsynchron ausgelesen werden können.

Paul Graham et al. schlagen in ihrem Aufsatz "Instrumenting Bitstreams for Debugging FPGA Circuits", Proceedings of the 9th Annual IEEE Symposium on Field-Programmable Custom Computing Machines (2001), die Vorinstallation einer Überwachungsschaltung auf einem FPGA vor, um im Fehlerfall mittels nachimplementierter Leitungen die Programmlogik des FPGAs zu untersuchen.

Die Erfindung ist ein Verfahren zur Fehlersuche in der Programmlogik eines Computersystems, das zumindest eine erste und eine zweite programmierbare Gatteranordnung umfasst. Das Verfahren umfasst zunächst die Verfahrensschritte der Programmierung einer ersten logischen Schaltung auf der ersten programmierbaren Gatteranordnung und der Programmierung einer zweiten logischen Schaltung auf der zweiten programmierbaren Gatteranordnung.

Einleitend zur weiteren Beschreibung des Verfahrens werden nachfolgend einige in der vorliegenden Beschreibung verwendete Begriffe erläutert.

Eine Netzliste ist eine Information, die die für eine auf eine programmierbare Gatteranordnung zu ladende Programmlogik genutzten Ressourcen der programmierbaren Gatteranordnung und die elektrischen Verbindungen der genutzten Ressourcen untereinander definiert. Aus einer Netzliste ist die Programmlogik herleitbar, aber sie beinhaltet keine Information über die räumliche Position der in ihr aufgelisteten Ressourcen und keine Information über den räumlichen Verlauf der der elektrischen Verbindungen zwischen den Ressourcen.

Ein Design ist eine Information, die die räumliche Position der in einer Netzliste aufgelisteten Ressourcen und den räumlichen Verlauf der in der Netzliste definierten elektrischen Verbindungen auf einer programmierbaren Gatteranordnung definiert.

Der Begriff der Programmierung bezeichnet in der vorliegenden Anmeldung grundsätzlich und ausschließlich eine Einspeisung eines Bitstroms in eine programmierbare Gatteranordnung zur Einrichtung der programmierbaren Gatteranordnung nach den Vorgaben eines Designs. Eine "Programmierung mit X", wobei X ein Platzhalter für eine beliebige auf einer programmierbaren Gatteranordnung durch Programmierung einrichtbare Entität ist, insbesondere eine logische Schaltung, eine Überwachungsschaltung, eine Signalleitung oder eine Triggersignalleitung, bezeichnet eine Einrichtung der Entität auf der programmierbaren Gatteranordnung durch Programmierung.

Auf der ersten programmierbaren Gatteranordnung wird, neben der ersten logischen Schaltung, eine erste Überwachungsschaltung programmiert, mittels derer im Fehlerfall Signale aus der ersten logischen Schaltung auslesbar sind. Die erste Überwachungsschaltung umfasst einen ersten Signaleingang und einen ersten Triggersignaleingang und ist eingerichtet, infolge eines am ersten Triggersignaleingang anliegenden Triggersignals einen Signalwert eines am ersten Signaleingang anliegenden Signals auszulesen und zu speichern. Zunächst ist die erste Überwachungsschaltung aber kommunikativ von der ersten logischen Schaltung isoliert, d.h. das Design der ersten programmierbaren Gatteranordnung umfasst keine Signalleitungen zwischen der ersten logischen Schaltung und der Überwachungsschaltung, sodass kein Austausch von Signalen zwischen der ersten logischen Schaltung und der ersten Überwachungsschaltung möglich ist.

Analog wird auf der zweiten programmierbaren Gatteranordnung neben der zweiten logischen Schaltung eine zweite Überwachungsschaltung programmiert, mittels derer im Fehlerfall Signale aus der zweiten logischen Schaltung auslesbar sind, die aber zunächst kommunikativ von der zweiten logischen Schaltung isoliert ist. Die zweite Überwachungsschaltung umfasst einen zweiten Signaleingang und einen zweiten Triggersignaleingang und ist eingerichtet, infolge eines am zweiten Triggersignaleingang anliegenden Triggersignals einen Signalwert eines am zweiten Signaleingang anliegenden Signals auszulesen und zu speichern.

Nach der Feststellung eines Fehlers in der Programmlogik des Computersystems ist erfindungsgemäß vorgesehen, ohne Veränderung der ersten logischen Schaltung eine erste Signalleitung, die ein Signal aus der ersten logischen Schaltung am ersten Signaleingang anlegt, ohne Veränderung der ersten logischen Schaltung in der ersten programmierbaren Gatteranordnung zu programmieren. Auf gleiche Weise ist die Programmierung einer zweiten Signalleitung, die ein Signal aus der zweiten logischen Schaltung am zweiten Signaleingang anlegt, ohne Veränderung der zweiten logischen Schaltung in der zweiten programmierbaren Gatteranordnung vorgesehen.

Nach Programmierung der ersten Signalleitung und der zweiten Signalleitung liegen sowohl an der ersten sowie an der zweiten Überwachungsschaltung Signale aus der ersten bzw. der zweiten logischen Schaltung an, die durch die jeweilige Überwachungsschaltung zur Untersuchung eines Fehlers in der Programmlogik des Computersystems auslesbar sind.

Abschließend wird ein am ersten Triggersignaleingang anliegendes erstes Triggersignal erzeugt, das die erste Überwachungsschaltung veranlasst, einen ersten Signalwert aus dem ersten Signaleingang auszulesen und zu speichern, und es wird ein am zweiten Triggersignaleingang anliegendes zweites Triggersignal erzeugt, das die zweite Überwachungsschaltung veranlasst, zeitsynchron zur Auslesung des ersten Signalwerts durch die erste Überwachungsschaltung einen zweiten Signalwert aus dem zweiten Signaleingang auszulesen und zu speichern.

Die erste Überwachungsschaltung umfasst einen ersten Triggersignalausgang und ist eingerichtet oder einrichtbar, infolge des am ersten Triggersignaleingang anliegenden ersten Triggersignals das zweite Triggersignal zu erzeugen und über den ersten Triggersignalausgang auszugeben. Dafür ist die Anlage des ersten Triggersignalausgangs an einem Signalausgangspin der ersten programmierbaren Gatteranordnung, der über einen Bus oder eine Signalleitung des Computersystems mit dem zweiten Triggersignaleingang verbunden ist, bei der Programmierung der ersten Überwachungsschaltung vorgesehen.

Demnach geschieht also nicht nur die Auslesung und Speicherung des ersten Signalwerts, sondern indirekt auch des zweiten Signalwerts infolge des ersten Triggersignals, da erst dieses die Erzeugung des zweiten Triggersignals veranlasst. In Kombination mit der vorhergehend geschilderten Einrichtung des ersten internen Triggersignaleingangs als ersten Triggersignaleingang ist es auf diese Weise möglich, infolge eines innerhalb der ersten logischen Schaltung stattfindenden Triggerereignisses die zeitsynchrone Auslesung und Speicherung von Signalwerten in mehreren programmierbaren Gatteranordnungen des Computersystems, zumindest in der ersten und der zweiten programmierbaren Gatteranordnung, zu veranlassen.

Aufgrund der hohen Taktung moderner programmierbarer Gatteranordnungen ist eine gute Synchronisierung der Auslesevorgänge des ersten Signalwerts und des zweiten Signalwerts grundsätzlich vorteilhaft, um den ersten und den zweiten Signalwert sinnvoll zueinander in Beziehung setzen zu können. In einigen Anwendungsfällen des Verfahrens kann schon die durch die Signallaufzeit des zweiten Triggersignals bedingte Verzögerung der Auslesung des zweiten Signalwerts problematisch sein. Wenn in dem Computersystem eine globale Systemzeit definiert ist, die sowohl die erste als auch die zweite programmierbare Gatteranordnung auszulesen eingerichtet sind, dann ist diese Verzögerung eliminierbar.

Dazu ist die erste Überwachungsschaltung eingerichtet, infolge des am ersten Triggersignaleingang anliegenden ersten Triggersignals einen in der Zukunft liegenden Zeitpunkt der globalen Systemzeit zu bestimmen, dessen zeitlicher Abstand zur Gegenwart mindestens der Signallaufzeit des zweiten Triggersignals zum zweiten Triggersignaleingang entspricht, und ein zweites Triggersignal zu erzeugen, aus dem der in der Zukunft liegende Zeitpunkt auslesbar ist. Die zweite Überwachungsschaltung ist eingerichtet, den Zeitpunkt aus dem zweiten Triggersignal auszulesen. Die erste Überwachungsschaltung ist eingerichtet, den ersten Signalwert des zu dem Zeitpunkt am ersten Signaleingang anliegenden ersten Signals auszulesen und zu speichern, und die zweite Überwachungsschaltung ist eingerichtet, den zweiten Signalwert des zu dem Zeitpunkt am zweiten Signaleingang anliegenden zweiten Signals auszulesen und zu speichern.

Besonders vorteilhaft haben sowohl die erste als auch die zweite programmierbare Gatteranordnung jeweils Zugriff auf eine lokale Uhr, die mit der globalen Systemzeit synchronisiert ist. Der Versatz der Auslesezeitpunkte des ersten Signalwerts und des zweiten Signalwerts ist dann im Wesentlichen auf den Gangunterschied beider lokaler Uhren beschränkt. In Kombination mit aus dem Stand der Technik bekannten Methoden zur Synchronisierung lokaler Uhren ist auf diese Weise der Versatz auf unter 100 Nanosekunden reduzierbar.

Wenn neben der ersten und der zweiten programmierbaren Gatteranordnung weitere programmierbare Gatteranordnungen in das Verfahren eingebunden sind, die auf gleiche Weise wie die erste programmierbare Gatteranordnung mit Überwachungsschaltungen programmiert sind und, zusätzlich zur zweiten programmierbaren Gatteranordnung, synchron Signalwerte auslesen sollen, dann sollte der zeitliche Abstand des in der Zukunft liegenden Zeitpunkts zur Gegenwart mindestens der Signallaufzeit des zweiten Triggersignals zur hinsichtlich der Signallaufzeit des zweiten Triggersignals am weitesten von der ersten programmierbaren Gatteranordnung entfernten programmierbaren Gatteranordnung entsprechen. Ohne Beschränkung der Allgemeinheit bedeutet das, dass vorteilhaft die Signallaufzeit des zweiten Triggersignals zu keinem Signaleingangspin einer der weiteren programmierbaren Gatteranordnungen größer ist als die Signallaufzeit zum zweiten Triggersignaleingang.

Das erfindungsgemäße Verfahren löst die vorhergehend genannten Probleme im Zusammenhang des Debuggings verteilter Systeme programmierbarer Gatteranordnungen und bewirkt dadurch eine wesentliche Aufwandsreduktion. Durch die Vorinstallation von Überwachungsschaltungen entfällt die Änderung von Designs bei der nachträglichen Installation der Überwachungsschaltungen. Die Programmierung der zur Überwachung nötigen Signalleitungen ist ohne Änderung des Designs und ohne Zurücksetzung der Zustände der Programmlogik auf jeweiligen programmierbaren Gatteranordnung möglich, sodass in der Programmlogik auftretende Fehler schnell reproduzierbar sind. In Kombination mit bekannten Techniken wie Virtual JTAG ist das Verfahren ohne Änderung der Hardware des Computersystems, beispielsweise die Verlegung von JTAG-Kabeln zwischen den programmierbaren Gatteranordnungen, durchführbar, sogar per Fernzugriff auf das Computersystem, beispielsweise über ein Virtuelles Privates Netzwerk (VPN) oder durch Zusendung eines das Verfahren ausführenden Skripts.

Eine Möglichkeit zur Programmierung der ersten Signalleitung und der zweiten Signalleitung ist partielle Rekonfiguration. Dabei handelt es sich um ein Verfahren zur nachträglichen Programmierung von Programmlogik auf einer programmierbaren Gatterordnung unter Verwendung noch freier Ressourcen ohne Beeinflussung oder Veränderung des bereits auf der programmierbaren Gatteranordnung vorhandenen Designs. Auch alle Zustände der auf der programmierbaren Gatteranordnung schon vorhandenen Programmlogik, beispielsweise die Zustände von Registern, bleiben bei einer Erweiterung des Designs durch partielle Rekonfiguration unverändert, sofern es sich bei der Erweiterung des Designs um eine reine Ergänzung ohne Überschreibung von Anteilen des ursprünglichen Designs handelt. Partielle Rekonfiguration ist sogar zur Laufzeit der auf der programmierbaren Gatteranordnung programmierten Programmlogik durchführbar. Für die Definition und Programmierung einer Signalleitung, die zur Programmierung durch partielle Rekonfiguration in ein bestehendes Design einer programmierbaren Gatteranordnung geeignet ist, werden folgende Verfahrensschritte vorgeschlagen:
Zunächst wird die Netzliste der programmierbaren Gatteranordnung um die Signalleitung erweitert und das bestehende Design der programmierbaren Gatteranordnung gesperrt. Unter einer derartigen Sperrung ist zu verstehen, dass einem zur Erstellung eines Designs einer programmierbaren Gatteranordnung anhand einer Netzliste eingerichteten Compiler ein schon bestehendes Design mit der Vorgabe vorgelegt wird, dass das bestehende Design bei der Erstellung eines neuen Designs erhalten bleibt. Der Compiler soll das neue Design also derart erstellen, dass das neue Design das bestehende Design als Teilmenge umfasst. Compiler mit einer derartigen Funktion zur Sperrung eines Designs sind im Stand der Technik bekannt.

Im Sinne des erfindungsgemäßen Verfahrens wird also das bestehende Design mit der logischen Schaltung und der kommunikativ von der logischen Schaltung isolierten Überwachungsschaltung, beispielsweise der ersten logischen Schaltung mit der ersten Überwachungsschaltung oder der zweiten logischen Schaltung mit der zweiten Überwachungsschaltung, gesperrt.

Auf Basis der um die Signalleitung erweiterten Netzliste und unter Berücksichtigung des gesperrten Designs wird nachfolgend ein neues Design erstellt. Der Compiler ist dadurch gezwungen, unter Nutzung im bestehenden Design noch freier Ressourcen den räumlichen Verlauf der Signalleitung derart zu planen, dass das bestehende, gesperrte Design, insbesondere die logische Schaltung, unverändert bleibt.

Nachfolgend wird die Signalleitung durch Bildung der Differenz des neuen Designs und des gesperrten Designs identifiziert und die identifizierte Signalleitung in der programmierbaren Gatteranordnung durch partielle Rekonfiguration programmiert.

Anhand der vorhergehend beschriebenen Verfahrensschritte werden zumindest die erste Signalleitung und die zweite Signalleitung programmiert. Natürlich sind auch weitere Signalleitungen, entweder in der ersten oder der zweiten programmierbaren Gatteranordnung oder in weiteren programmierbaren Gatteranordnungen des Computersystems, auf die gleiche Weise programmierbar.

Vorteilhaft umfasst die erste Überwachungsschaltung einen ersten externen Triggersignaleingang und die zweite Überwachungsschaltung einen zweiten externen Triggersignaleingang, und das Verfahren umfasst die Verfahrensschritte der Anlage des ersten externen Triggersignaleingangs an einen Signaleingangspin der ersten programmierbaren Gatteranordnung bei der Programmierung der ersten Überwachungsschaltung und der Anlage des zweiten externen Triggersignaleingangs an einen zweiten Signaleingangspin der zweiten programmierbaren Gatteranordnung bei der Programmierung der zweiten Überwachungsschaltung, wobei an beiden Signaleingangspins ein außerhalb der ersten bzw. der zweiten programmierbaren Gatteranordnung über einen Bus oder eine Signalleitung des Computersystems geführtes Triggersignal anlegbar ist.

Weiterhin vorteilhaft umfasst die erste Überwachungsschaltung einen ersten internen Triggersignaleingang, an den mittels einer Triggersignalleitung, die Teil des Designs der ersten programmierbaren Gatteranordnung ist, ein Triggersignal aus der ersten logischen Schaltung anlegbar ist, und das Verfahren umfasst den Verfahrensschritt der Einrichtung des ersten internen Triggersignaleingangs als ersten Triggersignaleingang durch Programmierung einer ersten Triggersignalleitung, die ein Signal aus der ersten logischen Schaltung am ersten internen Triggersignaleingang in der ersten programmierbaren Gatteranordnung ohne Veränderung der ersten logischen Schaltung anlegt.

Besonders vorteilhaft wird die erste Triggersignalleitung auf die gleiche Weise wie die erste Signalleitung und die zweite Signalleitung durch partielle Rekonfiguration programmiert.

In dieser Ausgestaltung geschieht die Auslesung und Speicherung des ersten Signalwerts durch die erste Überwachungsschaltung also infolge eines innerhalb der ersten programmierbaren Gatteranordnung in der ersten logischen Schaltung stattfindenden Triggerereignisses. Die Triggersignalleitung ist prinzipiell an ein beliebiges innerhalb der ersten logischen Schaltung übertragenes Signal anlegbar, sodass eine Vielzahl von innerhalb der ersten Programmlogik möglichen Ereignissen als Triggerereignis für das erste Triggersignal in Frage kommt. Das erste Triggersignal kann beispielsweise durch die Einnahme eines bestimmten Zustand eines in der ersten logischen Schaltung implementierten Zustandsautomaten erzeugt werden, durch eine Flanke eines Signals, eine Änderung des Werts einer variablen Größe in der Programmlogik der ersten logischen Schaltung, die Wahrheit eines mathematischen Vergleichs einer variablen Größe mit einem bestimmten Wert, die Wahrheit einer logischen Verknüpfung mindestens zweier mathematischer Vergleiche einer variablen Größe mit jeweils einem bestimmten Wert, oder die Wahrheit einer logischen Verknüpfung mindestens zweier der vorhergehend aufgelisteten Ereignisse.

Wenn in der zuletzt erläuterten Ausgestaltung von der Erzeugung des ersten Triggersignals durch ein Ereignis in der ersten logischen Schaltung die Rede ist, dann ist unter einem Triggersignal natürlich nicht ein beliebiges an einem Triggersignaleingang anliegendes Signal zu verstehen. Da beispielsweise die erste logische Schaltung erfindungsgemäß nicht geändert wird, muss die Logik zur Erkennung des Ereignisses in der ersten Überwachungsschaltung implementiert sein. Deshalb muss notwendigerweise dauerhaft "ein Signal" am ersten Triggersignaleingang anliegen. Soll beispielsweise die Flanke eines Signals das Triggersignal erzeugen, dann muss, um das betreffende Signal zu überwachen, notwendigerweise dauerhaft ein Signal am Triggersignaleingang anliegen, aber erst ein Wechsel des Signals von Low auf High oder umgekehrt bewirkt eine Interpretation des anliegenden Signals als Triggersignal.

Dementsprechend ist es von Vorteil, wenn zumindest die erste Überwachungsschaltung, insbesondere jede auf einer programmierbaren Gatteranordnung des Computersystems programmierte Überwachungsschaltung, konfigurierbar ist, und das Verfahren den zusätzlichen Verfahrensschritt der Konfiguration der ersten Überwachungsschaltung umfasst, insbesondere per Fernzugriff auf das Computersystem, derart, dass die erste Überwachungsschaltung ein am ersten Triggersignaleingang anliegendes Signal bei Auftreten eines der vorhergehend aufgezählten Ereignisse als erstes Triggersignal interpretiert. Ein Konfigurationsvorgang einer Überwachungsschaltung kann beispielsweise durch das Setzen von Registern innerhalb der Überwachungsschaltung erfolgen, wobei der Zustand der Register eine Funktionalität der Überwachungsschaltung definiert. Eine Überwachungsschaltung kann auch als Softcore, also als ein in eine programmierbare Gatteranordnung programmierter Prozessor ausgestaltet sein, und der Konfigurationsvorgang erfolgt durch das Laden einer durch Maschinenbefehle definierten Programmlogik in die Überwachungsschaltung.

Die nachfolgend erläuterten Zeichnungen illustrieren eine beispielhafte Ausgestaltung des Computersystems und des erfindungsgemäßen Verfahrens. Es zeigen
- Figur 1: eine schematische Darstellung eines verteilten Computersystems mit programmierbaren Gatteranordnungen;
- Figur 2: einen Ablauf von Zwischenschritten zur Programmierung von Signalleitungen und internen Triggersignalleitungen auf einer programmierbaren Gatteranordnung; und
- Figur 3: das erfindungsgemäß für eine Fehlersuche eingerichtete verteilte Computersystem.

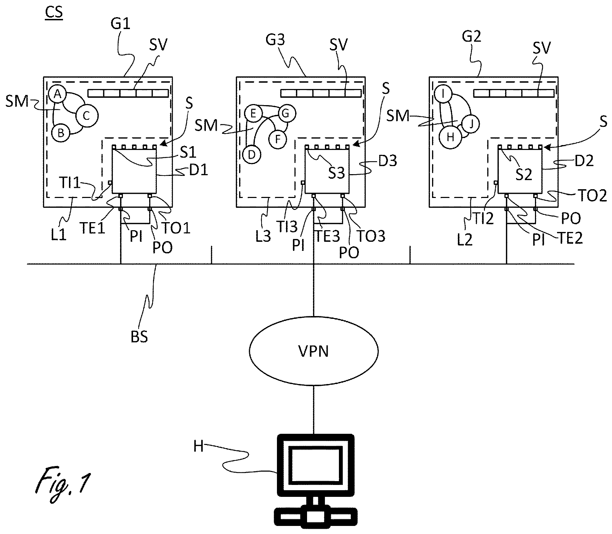

Die Abbildung der Figur 1 zeigt ein Computersystem CS mit verteilten programmierbaren Gatteranordnungen, die durch einen Bus BS des Computersystems CS kommunikativ miteinander verbunden sind. Der Übersichtlichkeit halber sind nur eine erste programmierbare Gatteranordnung G1, eine zweite programmierbare Gatteranordnung G2 und eine dritte programmierbare Gatteranordnung G3 dargestellt. Ein reales Computersystem kann eine Vielzahl programmierbarer Gatteranordnungen umfassen, die auf unterschiedlichen Komponenten des Computersystems aufgebracht sind und jeweils entweder durch einen Endanwender programmierbar sind oder, für einen Endanwender unzugänglich, für spezifische Aufgaben vorprogrammiert sind.

Auf der ersten programmierbaren Gatteranordnung G1 sind eine erste logische Schaltung L1 und eine erste Überwachungsschaltung D1 programmiert, auf der zweiten programmierbaren Gatteranordnung G2 eine zweite logische Schaltung L2 und eine zweite Überwachungsschaltung D2, und auf der dritten programmierbaren Gatteranordnung G3 eine dritte logische Schaltung L3 und eine dritte Überwachungsschaltung D3. Jede der dargestellten logischen Schaltung L1, L2, L3 umfasst einen in der jeweiligen logischen Schaltung implementierten Zustandsautomaten SM und einen Zustandsvektor SV, aus dem der jeweils aktuelle Zustand des Zustandsautomaten SV auslesbar ist.

Auf der ersten programmierbaren Gatteranordnung G1 ist außerdem eine konfigurierbare erste Überwachungsschaltung D1 programmiert, umfassend einen ersten internen Triggersignaleingang TI1, einen ersten externen Triggersignaleingang TE1, einen ersten Triggersignalausgang TO1 und einen ersten Signaleingang S1. Der erste externe Triggersignaleingang TE1 liegt an einem ersten Signaleingangspin PI der ersten programmierbaren Gatteranordnung G1 an und ist über diesen an den Bus BS angeschlossen. Der erste Triggersignalausgang TO1 liegt an einem Signalausgangspin PO der ersten programmierbaren Gatteranordnung an und ist über diesen an den Bus BS angeschlossen. Die erste Überwachungsschaltung D1 ist kommunikativ von der ersten logischen Schaltung L1 isoliert, d.h. zwischen der ersten logischen Schaltung L1 und der ersten Überwachungsschaltung D1 sind keine Signalleitungen oder Triggersignalleitungen verlegt, und es besteht keine Möglichkeit des Austauschs von Signalen zwischen der ersten logischen Schaltung L1 und der ersten Überwachungsschaltung D1. Die Überwachungsschaltungen umfassen außerdem weitere Signaleingänge S, an denen erfindungsgemäß Signale aus den logischen Schaltungen L1, L2, L3 anlegbar sind.

Auf der zweiten programmierbaren Gatteranordnung G2 ist eine konfigurierbare, kommunikativ von der zweiten logischen Schaltung L2 isolierte zweite Überwachungsschaltung D2 programmiert, mit einem zweiten Signaleingang S2, einem zweiten internen Triggersignaleingang TI2, einem zweiten Triggersignalausgang TO2, der an einem Signalausgangspin PO anliegt und über diesen an den Bus BS angeschlossen ist, und einem zweiten externen Triggersignaleingang TE2, der an einem Signaleingangspin PI der zweiten programmierbaren Gatteranordnung G2 anliegt. Auf der dritten programmierbaren Gatteranordnung G3 ist eine konfigurierbare, kommunikativ von der dritten logischen Schaltung L3 isolierte dritte Überwachungsschaltung D3 programmiert, mit einem dritten Signaleingang S3, einem dritten internen Triggersignaleingang TI3, einem dritten Triggersignalausgang TO3, der an einem Signalausgangspin PO anliegt und über diesen an den Bus BS angeschlossen ist, und einem dritten externen Triggersignaleingang TE3, der an einem Signaleingangspin PI der dritten programmierbaren Gatteranordnung G3 anliegt. Sowohl die zweite Überwachungsschaltung D2 als auch die dritte Überwachungsschaltung D3 sind identisch zur ersten Überwachungsschaltung D1 ausgestaltet.

Die logischen Schaltungen L1, L2, L3 definieren die eigentliche Funktionalität der jeweiligen programmierbaren Gatteranordnung G1, G2, G3 im Normalbetrieb des Computersystems CS. Die Überwachungsschaltungen D1, D2, D3 werden im Normalbetrieb nicht gebraucht, sondern nur zur Fehlersuche nach Feststellung eines Fehlers in der Programmlogik des Computersystems, also der Gesamtheit aller auf unterschiedlichen Komponenten des Computersystems installierten, in ihrer Gesamtheit die Funktionalität des Computersystems definierenden Programmlogiken. Sofern die programmierbaren Gatteranordnungen G1, G2, G3 für einen Endanwender unzugänglich vorprogrammiert sind, entspricht die Darstellung der Figur 1 einem Auslieferungszustand des Computersystems CS. Sofern zumindest eine der programmierbaren Gatteranordnungen durch den Endanwender selbst programmierbar ist, ist, beispielsweise mittels einer entsprechend ausgestalteten, dem Endanwender zur Verfügung stehenden Programmiersoftware, dafür Sorge zu tragen, dass bei jeder Neuprogrammierung einer programmierbaren Gatteranordnung G1, G2, G3 immer auch eine Überwachungsschaltung D1, D2, D3 auf der programmierbaren Gatteranordnung programmiert wird.

Ein Hostrechner H ist über eine geeignete Schnittstelle, in der Abbildung beispielhaft als Virtuelles Privates Netzwerk (VPN) ausgestaltet, an den Bus BS des Computersystems CS angebunden, um nach Feststellung eines Fehlers in der Programmlogik des Computersystems CS die nachfolgend erläuterten Verfahrensschritte durchzuführen. Insbesondere sind das Computersystem CS und der Hostrechner H derart eingerichtet, dass mittels des Hostrechners H die Konfiguration der Überwachungsschaltungen D1, D2, D3 und die Programmierung von Signalleitungen SI1 und Triggersignalleitungen TS1 auf den programmierbaren Gatteranordnungen durchführbar ist.

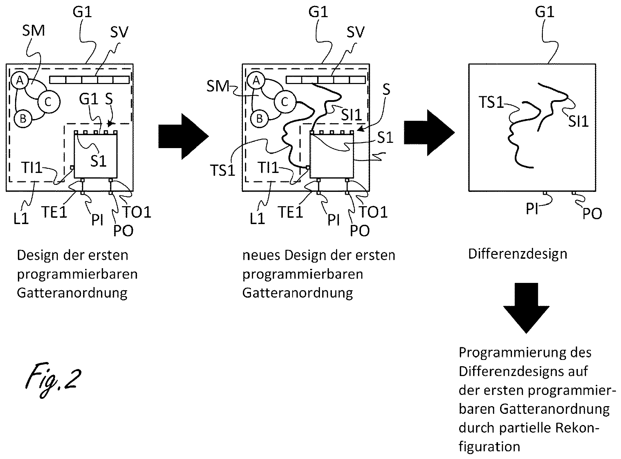

Die Abbildung der Figur 2 illustriert beispielhaft eine Implementierung einer ersten Signalleitung SI1 und einer ersten Triggersignalleitung TS1 für die erste programmierbare Gatteranordnung G1. Ausgehend vom Design der ersten programmierbaren Gatteranordnung G1, das zu diesem Zeitpunkt die erste logische Schaltung L1 und die kommunikativ von dieser isolierte Überwachungsschaltung D1 umfasst, wird die Netzliste des Designs der ersten programmierbaren Gatteranordnung G1 um eine erste Signalleitung SI1 und eine erste Triggersignalleitung TS1 erweitert. Mittels eines geeigneten Compilers wird die erweiterte Netzliste in ein neues Design der ersten programmierbaren Gatteranordnung G1 übersetzt. Vor Erstellung des neuen Designs wird allerdings das Design der ersten programmierbaren Gatteranordnung G1 gesperrt, d.h. dem Compiler wird mitgeteilt, dass bei der Erstellung des neuen Designs alle Merkmale des ursprünglichen Designs erhalten bleiben müssen, sodass das neue Design sich vom ursprünglichen Design ausschließlich durch das Vorhandensein der in der erweiterten Netzliste hinzugefügten Leitungen, konkret der ersten Signalleitung SI1 und der ersten Triggersignalleitung TS1, unterscheidet. Der Compiler ist dadurch gezwungen, bei der Plazierung der dem Design der ersten programmierbaren Gatteranordnung G1 hinzugefügten Leitungen ausschließlich auf freie, im Design der ersten programmierbaren Gatteranordnung G1 ungenutzte Ressourcen der ersten programmierbaren Gatteranordnung G1 zuzugreifen.

Zur Identifikation der im neuen Design hinzugefügten Leitungen wird durch Ermittlung der Differenz des neuen Designs und des nunmehr gesperrten Designs ein Differenzdesign erstellt, das ausschließlich die Elemente des neuen Designs umfasst, die im gesperrten Design nicht vorhanden sind, also ausschließlich die neu hinzugefügten Leitungen, konkret die erste Signalleitung SI1 und die erste Triggersignalleitung TS1. Das Differenzdesign wird mittels partieller Rekonfiguration auf die erste programmierbare Gatteranordnung G1 programmiert, wobei das Design der ersten programmierbaren Gatteranordnung G1 ansonsten unverändert bleibt, inklusive aller Zustände in der Programmlogik der ersten logischen Schaltung L1. Die Programmierung des Differenzdesigns durch partielle Rekonfiguration kann sogar im laufenden Betrieb des Computersystems CS inklusive der ersten programmierbaren Gatteranordnung G1 erfolgen.

Compiler mit den für die Durchführung der vorhergehend im Zusammenhang mit der Figur 2 erläuterten Verfahrensschritten notwendigen technischen Funktionalitäten, insbesondere zur Sperrung eines Designs, zur Bildung eines Differenzdesigns und zur partiellen Rekonfiguration, sind im Stand der Technik vorhanden.

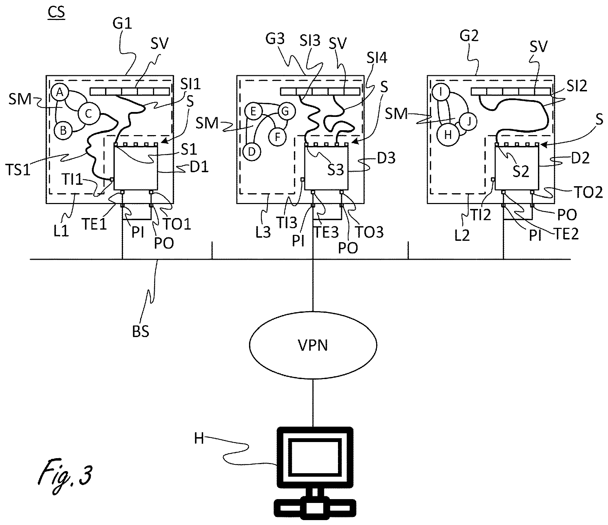

Auf gleiche Weise wie vorhergehend am Beispiel der ersten programmierbaren Gatteranordnung G1 beschrieben werden auch auf weiteren programmierbaren Gatteranordnungen des Computersystems CS nach Bedarf Signalleitungen und/oder Triggersignalleitungen programmiert. Das entsprechend eingerichtete Computersystem CS ist in der Abbildung der Figur 3 dargestellt. Das Design der ersten programmierbaren Gatteranordnung G1 ist um die erste Signalleitung SI1 und die erste Triggersignalleitung TS1 erweitert. Das Design der zweiten programmierbaren Gatteranordnung G2 ist um eine zweite Signalleitung SI2 erweitert, und das Design der dritten programmierbaren Gatteranordnung G3 ist um eine dritte Signalleitung SI3 und eine vierte Signalleitung SI4, die an einem weiteren Signaleingang S anliegt, erweitert.

Die erste Triggersignalleitung TS1 legt ein Signal aus dem Zustandsautomaten SM in der ersten logischen Schaltung L1 am ersten internen Triggersignaleingang TI1 an, und die erste Überwachungsschaltung D1 wird mittels einer geeigneten Software auf dem Hostrechner H eingerichtet, die Einnahme eines Zustands C des Zustandsautomaten SM als erstes Triggersignal zu interpretieren. Die erste Signalleitung SI1 legt ein weiteres Signal aus der ersten logischen Schaltung L1 am ersten Signaleingang S1 an, derart, dass die erste Überwachungsschaltung D1 mittels der ersten Signalleitung SI1 einen Wert aus dem Zustandsvektor SV in der ersten logischen Schaltung L1 auslesen kann. Die erste Überwachungsschaltung D1 wird mittels der Software auf dem Hostrechner H derart konfiguriert, dass das Anliegen des ersten Triggersignals die erste Überwachungsschaltung D1 zum einen veranlasst, als ersten Signalwert einen Wert aus dem Zustandsvektor SV in der ersten logischen Schaltung L1 auszulesen und zu speichern, und zum zweiten, ein zweites Triggersignal zu erzeugen und über den ersten Triggersignalausgang TO1 auszugeben, sodass das zweite Triggersignal über den Bus BS zum zweiten externen Triggersignaleingang TE2 und zum dritten externen Triggersignaleingang TE3 geführt wird.

Die zweite Überwachungsschaltung D2 wird mittels der Software auf dem Hostrechner H derart konfiguriert, dass das Anliegen des von der ersten Überwachungsschaltung D1 erzeugten zweiten Triggersignals am zweiten externen Triggersignaleingang TE2 die zweite Überwachungsschaltung D2 veranlasst, als zweiten Signalwert einen Wert aus dem Zustandsvektor SV in der zweiten logischen Schaltung L2 auszulesen und zu speichern. Die dritte Überwachungsschaltung D3 wird mittels der Software auf dem Hostrechner H derart eingerichtet, dass das Anliegen des zweiten Triggersignals am dritten externen Triggersignaleingang TE3 die dritte Überwachungsschaltung D3 veranlasst, als dritten Signalwert einen Wert aus dem Zustandsvektor SV und als vierten Signalwert einen weiteren Wert aus dem Zustandsvektor SV in der dritten logischen Schaltung L3 auszulesen und zu speichern.

Um die Synchronität der Auslesevorgänge der Signalwerte zu optimieren, haben die erste programmierbare Gatteranordnung G1, die zweite programmierbare Gatteranordnung G2 und die dritte programmierbare Gatteranordnung G3 jeweils Zugriff auf eine globale Systemzeit des Computersystems CS. Aus dem zweiten Triggersignal ist eine zum Zeitpunkt der Auslesung des ersten Signalwerts in der Zukunft liegende, durch die erste Überwachungsschaltung D1 bestimmte Systemzeit auslesbar, die so gewählt ist, dass die Signallaufzeit des zweiten Triggersignals zum zweiten externen Triggersignaleingang TE2, zum dritten externen Triggersignaleingang TE3 und zu allen externen Triggersignaleingängen möglicher weiterer Netzwerkteilnehmer des Computersystems CS, die das zweite Triggersignal einlesen, nicht größer ist als der zeitliche Abstand der aus dem zweiten Triggersignal auslesbaren Systemzeit zum Zeitpunkt der Auslesung des ersten Signalwerts. Die zweite Überwachungsschaltung D2 und die dritte Überwachungsschaltung D3 sind jeweils eingerichtet, die in dem zweiten Triggersignal hinterlegte Systemzeit auszulesen und die Signalwerte der zu der entsprechenden Systemzeit am zweiten Signaleingang S2, am dritten Signaleingang S3 bzw. am vierten Signaleingang S4 anliegenden Signale auszulesen und zu speichern.

Mittels des Hostrechners H sind nachfolgend der erste, der zweite, der dritte und der vierte Signalwert auslesbar, ebenso eventuelle erfindungsgemäß erfasste weitere Signalwerte von in den Abbildungen nicht dargestellten Teilnehmern des Computersystems CS, um die Signalwerte zur Untersuchung eines Fehlers in der Programmlogik des Computersystems CS zu dem das erste Triggersignal auslösenden Ereignis in Beziehung zu setzen. Das erfindungsgemäße Verfahren ist beliebig oft wiederholbar, um neue Signalleitungen SI1, SI2, SI3, SI4 und/oder Triggersignalleitungen TS1 auf den programmierbaren Gatteranordnungen G1, G2, G3 des Computersystems CS zu programmieren.

## Patentansprüche

1. Verfahren zur Fehlersuche in der Programmlogik eines Computersystems (CS), in dem eine globale Systemzeit definiert ist und das zumindest eine erste programmierbare Gatteranordnung (G1), beispielsweise ein erstes FPGA, und eine zweite programmierbare Gatteranordnung (G2), beispielsweise ein zweites FPGA, umfasst,
die folgenden Verfahrensschritte umfassend: Programmierung einer ersten logischen Schaltung (L1) auf der ersten programmierbaren Gatteranordnung (G1),
Programmierung einer zweiten logischen Schaltung (L2) auf der zweiten programmierbaren Gatteranordnung (G2);
Programmierung einer kommunikativ von der ersten logischen Schaltung (L1) isolierten ersten Überwachungsschaltung (D1), die einen ersten Signaleingang (S1), einen ersten Triggersignaleingang (TI1) und einen ersten Triggersignalausgang (TO1) umfasst und eingerichtet ist, infolge eines am ersten Triggersignaleingang (TI1) anliegenden Triggersignals einen Signalwert eines am ersten Signaleingang (S1) anliegenden Signals auszulesen und zu speichern, auf der ersten programmierbaren Gatteranordnung (G1);Programmierung einer kommunikativ von der zweiten logischen Schaltung (L2) isolierten zweiten Überwachungsschaltung (D2), die einen zweiten Signaleingang (S2) und einen zweiten Triggersignaleingang (TE2) umfasst und eingerichtet ist, infolge eines am zweiten Triggersignaleingang (TE2) anliegenden Triggersignals einen Signalwert eines am zweiten Signaleingang (S2) anliegenden Signals auszulesen und zu speichern, auf der zweiten programmierbaren Gatteranordnung (G2);
Anlage des ersten Triggersignalausgangs (TO1) an einem Signalausgangspin (PO) der ersten programmierbaren Gatteranordnung (G1), der über einen Bus (B) oder eine Signalleitung des Computersystems (CS) mit dem zweiten Triggesignaleingang verbunden ist, bei der Programmierung der ersten Überwachungschaltung (D1);
Programmierung einer ersten Signalleitung (SI1), die ein Signal aus der ersten logischen Schaltung (L1) am ersten Signaleingang (S1) anlegt, in der ersten programmierbaren Gatteranordnung (G1) ohne Veränderung der ersten logischen Schaltung (L1);
Programmierung einer zweiten Signalleitung (SI2), die ein Signal aus der zweiten logischen Schaltung (L2) am zweiten Signaleingang (S2) anlegt, in der zweiten programmierbaren Gatteranordnung (G2) ohne Veränderung der zweiten logischen Schaltung (L2); und
Erzeugung eines am ersten Triggersignaleingang (TI1) anliegenden ersten Triggersignals, das die erste Überwachungsschaltung (D1) veranlasst, einen ersten Signalwert aus dem ersten Signaleingang (S1) auszulesen und zu speichern;
**dadurch gekennzeichnet, dass** sowohl die erste Überwachungsschaltung (D1) als auch die zweite Überwachungsschaltung (D2) eingerichtet sind, die globale Systemzeit auszulesen; die erste Überwachungsschaltung (D1) eingerichtet ist, infolge des am ersten Triggersignaleingang (TI1) anliegenden ersten Triggersignals einen in der Zukunft liegenden Zeitpunkt der globalen Systemzeit zu bestimmen, dessen zeitlicher Abstand zur Gegenwart mindestens der Signallaufzeit des zweiten Triggersignals zum zweiten Triggersignaleingang (TE2) entspricht;
die erste Überwachungsschaltung (D1) eingerichtet ist, infolge des am ersten Triggersignaleingang (TI1) anliegenden Triggersignals ein am zweiten Triggersignaleingang (TI2) anliegendes zweites Triggersignal zu erzeugen, aus dem der Zeitpunkt auslesbar ist, und über den ersten Triggesignalausgang (TO1) auszugeben;
die zweite Überwachungsschaltung (D2) eingerichtet ist, den Zeitpunkt aus dem zweiten Triggersignal auszulesen;
die erste Überwachungsschaltung (D1) eingerichtet ist, den ersten Signalwert des zu dem Zeitpunkt am ersten Signaleingang (S1) anliegenden ersten Signals auszulesen und zu speichern; und
die zweite Überwachungsschaltung (D2) eingerichtet ist, den zweiten Signalwert des zu dem Zeitpunkt am zweiten Signaleingang (S2) anliegenden zweiten Signals auszulesen und zu speichern.

2. Verfahren gemäß Anspruch 1, mit dem Verfahrensschritt: Programmierung der ersten Signalleitung (S1) und der zweiten Signalleitung (S2) durch partielle Rekonfiguration.

3. Verfahren gemäß Anspruch 2 mit den folgenden Verfahrensschritten zur Programmierung der ersten Signalleitung (SI1):
- Erweiterung der Netzliste der ersten programmierbaren Gatteranordnung (G1) um die erste Signalleitung (SI1);
- Sperrung des Designs der ersten programmierbaren Gatteranordnung (G1);
- Erstellung eines der erweiterten Netzliste der ersten programmierbaren Gatteranordnung (G1) entsprechenden neuen Designs der ersten programmierbaren Gatteranordnung (G1) unter Berücksichtigung der Sperrung des Designs der ersten programmierbaren Gatteranordnung (G1);
- Identifikation der ersten Signalleitung (SI1) im neuen Design der ersten programmierbaren Gatteranordnung (G1) durch Ermittlung der Differenz des neuen Designs der ersten programmierbaren Gatteranordnung (G1) und des gesperrten Designs der ersten programmierbaren Gatteranordnung (G1);
- Programmierung der ersten Signalleitung (SI1) in der ersten programmierbaren Gatteranordnung;
und mit den folgenden Verfahrensschritten zur Programmierung der zweiten Signalleitung (SI2):
- Erweiterung der Netzliste der zweiten programmierbaren Gatteranordnung (G2) um die zweite Signalleitung (SI2);
- Sperrung des Designs der zweiten programmierbaren Gatteranordnung (G2);
- Erstellung eines der erweiterten Netzliste der zweiten programmierbaren Gatteranordnung (G2) entsprechenden neuen Designs der zweiten programmierbaren Gatteranordnung (G2) unter Berücksichtigung der Sperrung des Designs der zweiten programmierbaren Gatteranordnung (G2);
- Identifikation der zweiten Signalleitung (SI2) im neuen Design der zweiten programmierbaren Gatteranordnung (G2) durch Ermittlung der Differenz des neues Designs der zweiten programmierbaren Gatteranordnung (G2) und des gesperrten Designs der zweiten programmierbaren Gatteranordnung (G2);
- Programmierung der zweiten Signalleitung (SI2) in der zweiten programmierbaren Gatteranordnung (G2);

4. Verfahren gemäß Anspruch 1, wobei die erste Überwachungsschaltung (D1) einen ersten externen Triggersignaleingang (TE1) umfasst;
die zweite Überwachungsschaltung einen zweiten externen Triggersignaleingang (TE2) umfasst;
und die erste Überwachungsschaltung einen ersten internen Triggersignaleingang (TI1) umfasst, an den mittels einer Triggersignalleitung (TS1), die Teil des Designs der ersten programmierbaren Gatteranordnung (G1) ist, ein Triggersignal aus der ersten logischen Schaltung (L1) anlegbar ist, mit den Verfahrensschritten:
Anlage des ersten externen Triggersignaleingangs (TE1) an einen Signaleingangspin (PI) der ersten programmierbaren Gatteranordnung (G1), an den ein außerhalb der ersten programmierbaren Gatteranordnung (G1) über einen Bus (B) oder eine Signalleitung des Computersystems (CS) geführtes Triggersignal anlegbar ist, bei der Programmierung der ersten Überwachungsschaltung (D1);
Anlage des zweiten externen Triggersignaleingangs (TE2) an einen Signaleingangspin (PI) der zweiten programmierbaren Gatteranordnung(G2), an den ein außerhalb der zweiten programmierbaren Gatteranordnung (G2) über einen Bus (B) oder eine Signalleitung des Computersystems (CS) geführtes Triggersignal anlegbar ist, bei der Programmierung der zweiten Überwachungsschaltung (D2);
Einrichtung des ersten internen Triggersignaleingangs (TI1) als ersten Triggersignaleingang durch Programmierung einer ersten Triggersignalleitung (TS1), die ein Signal aus der ersten logischen Schaltung (L1) am ersten internen Triggersignaleingang (TI1) anlegt, in der ersten programmierbaren Gatteranordnung (G1) ohne Veränderung der ersten logischen Schaltung (L1).

5. Verfahren gemäß Anspruch 4, mit dem Verfahrensschritt: Programmierung der ersten Triggersignalleitung (TS1) durch partielle Rekonfiguration.

6. Verfahren gemäß Anspruch 5 mit den folgenden Verfahrensschritten zur Programmierung der ersten Triggersignalleitung (TS1):
- Erweiterung der Netzliste der ersten programmierbaren Gatteranordnung (G1) um die erste Triggersignalleitung (TS1);
- Sperrung des Designs der ersten programmierbaren Gatteranordnung (G1);
- Erstellung eines der erweiterten Netzliste der ersten programmierbaren Gatteranordnung (G1) entsprechenden neuen Designs der ersten programmierbaren Gatteranordnung (G1) unter Berücksichtigung der Sperrung des Designs der ersten programmierbaren Gatteranordnung (G1);
- Identifikation der ersten Triggersignalleitung (TS1) im neuen Design der ersten programmierbaren Gatteranordnung (G1) durch Ermittlung der Differenz des neues Designs der ersten programmierbaren Gatteranordnung (G1) und des gesperrten Designs der ersten programmierbaren Gatteranordnung (G1);
- Programmierung der ersten Triggersignalleitung (TS1) in der ersten programmierbaren Gatteranordnung (G1);

7. Verfahren gemäß Anspruch 1, wobei das Computersystem (CS) neben der ersten programmierbaren Gatteranordnung (G1) und der zweiten programmierbaren Gatteranordnung (G2) weitere programmierbare Gatteranordnungen umfasst,
jede der weiteren programmierbaren Gatteranordnungen einen Signaleingangspin umfasst, der über einen Bus (B) oder eine Signalleitung des Computersystems (CS) derart mit dem ersten Triggersignalausgang (TO1) verbunden ist, dass das zweite Triggersignal an dem jeweiligen Signaleingangspin anliegt,
und die Signallaufzeit des zweiten Triggersignals zu keinem Signaleingangspin einer der weiteren programmierbaren Gatteranordnungen größer ist als die Signallaufzeit zum zweiten Triggersignaleingang.

8. Verfahren gemäß Anspruch 4, wobei die erste Triggersignalleitung (TS1) derart programmiert wird, dass eines der folgenden Ereignisse das erste Triggersignal erzeugt:
- die Einnahme eines bestimmten Zustands eines in der ersten logischen Schaltung (L1) implementierten Zustandsautomaten (SM);
- eine Flanke eines Signals aus der ersten logischen Schaltung (L1);
- eine Änderung des Werts einer variablen Größe in der Programmlogik der ersten logischen Schaltung (L1);
- die Wahrheit eines mathematischen Vergleichs einer variablen Größe in der Programmlogik der ersten logischen Schaltung (L1) mit einem bestimmten Wert;
- die Wahrheit einer logischen Verknüpfung mindestens zweier mathematischer Vergleiche einer variablen Größe in der Programmlogik der ersten logischen Schaltung (L1) mit jeweils einem bestimmten Wert; oder
- die Wahrheit einer logischen Verknüpfung mindestens zweier der vorhergehend aufgelisteten Ereignisse.

9. Verfahren gemäß einem der vorhergehenden Ansprüche, wobei die Programmierung der ersten Signalleitung (SI1) und der zweiten Signalleitung (SI2), insbesondere weiterhin die Programmierung der ersten Triggersignalleitung (TS1), per Fernzugriff auf das Computersystem (CS) erfolgt.

10. Verfahren gemäß einem der vorhergehenden Ansprüche mit dem Verfahrensschritt: Konfiguration der ersten Überwachungsschaltung (D1), insbesondere per Fernzugriff auf das Computersystem (CS), derart, dass die erste Überwachungsschaltung (D1) ein am ersten Triggersignaleingang (TI1) anliegendes Signal bei Auftreten eines der im Anspruch 8 aufgelisteten Ereignisse als erstes Triggersignal interpretiert.

## Claims

1. A method for error finding in the programming logic of a computer system (CS) in which a global system time is defined, comprising at least one first programmable gate array (G1), for example a first FPGA, and a second programmable gate array (G2), for example a second FPGA, comprising the following method steps: programming a first logic circuit (L1) on the first programmable gate array (G1), programming a second logic circuit (L2) on the second programmable gate array (G2);
programming on the first programmable gate array (G1) a first monitor circuit (D1) communicatively isolated from the first logic circuit (L1) and comprising a first signal input (S1), a first trigger signal input (TI1), and a first trigger signal output (TO1) and being set up for reading and saving a signal value of a signal present at a first signal input (S1) as a result of a trigger signal present at the first trigger signal input (TI1); programming on the second programmable gate array (G2) a second monitor circuit (D2) communicatively isolated from the second logic circuit (L2) and comprising a second signal input (S2) and a second trigger signal input (TE2) and being set up for reading and saving a signal value of a signal present at the second signal input (S2) as a result of a trigger signal present at the second trigger signal input (TE2);
applying the first trigger signal output (TO1) to a signal output pin (PO) of the first programmable gate array (G1) when programming the first monitor circuit (D1), the signal output pin (PO) being connected to the second trigger signal input by means of a bus (B) or a signal line of the computer system (CS);
programming a first signal line (SI1) applying a signal from the first logic circuit (L1) to the first signal input (S1) in the first programmable gate array (G1) without changing the first logic circuit (L1);
programming a second signal line (SI2) applying a signal from the second logic circuit (L2) to the second signal input (S2) in the second programmable gate array (G2) without changing the second logic circuit (L2); and
generating a first trigger signal present at the first trigger signal input (TI1) causing the first monitor circuit (D1) to read and save a first signal value from the first signal input (S1);
**characterized in that** both the first monitor circuit (D1) and the second monitor circuit (D2) are set up for reading the global system time;
the first monitor circuit (D1) is set up for determining a point in time of the global system time in the future as a result of the first trigger signal present at the first trigger signal input (TI1), the time spacing thereof relative to the present at least corresponding to the signal propagation time of the second trigger signal to the second trigger signal input (TE2);
the first monitor circuit (D1) is set up for generating a second trigger signal present at the second trigger signal input (TI2) as a result of the trigger signal present at the first trigger signal input (TI1), from which the point in time can be read, and for outputting said trigger signal by means of the first trigger signal output (TO1);
the second monitor circuit (D2) is set up for reading the point in time from the second trigger signal;
the first monitor circuit (D1) is set up for reading and saving the first signal value of the first signal present at the first signal input (S1) at said point in time; and
the second monitor circuit (D2) is set up for reading and saving the second signal value of the second signal present at the second signal input (S2) at said point in time.

2. The method according to claim 1, having the method step:
programming the first signal line (S1) and the second signal line (S2) by means of partial reconfiguration.

3. The method according to claim 2, having the following method steps for programming the first signal line (SI1) :
- expanding the netlist of the first programmable gate array (G1) to add the first signal line (SI1);
- blocking the design of the first programmable gate array (G1);
- creating a new design of the first programmable gate array (G1) corresponding to the expanded netlist of the first programmable gate array (G1), taking into consideration the blocking of the design of the first programmable gate array (G1) ;
- identifying the first signal line (SI1) in the new design of the first programmable gate array (G1) by determining the difference of the new design of the first programmable gate array (G1) and the blocked design of the first programmable gate array (G1);
- programming the first signal line (SI1) in the first programmable gate array;
and having the following method steps for programming the second signal line (SI2):
- expanding the netlist of the second programmable gate array (G2) to add the second signal line (SI2);
- blocking the design of the second programmable gate array (G2);
- creating a new design of the second programmable gate array (G2) corresponding to the expanded netlist of the second programmable gate array (G2), taking into consideration the blocking of the design of the second programmable gate array (G2);
- identifying the second signal line (SI2) in the new design of the second programmable gate array (G2) by determining the difference of the new design of the second programmable gate array (G2) and the blocked design of the second programmable gate array (G2);
- programming the second signal line (SI2) in the second programmable gate array (G2).

4. The method according to claim 1, wherein the first monitor circuit (D1) comprises a first external trigger signal input (TE1) ;
the second monitor circuit comprises a second external trigger signal input (TE2);
and the first monitor circuit comprises a first internal trigger signal input (TI1) to which a trigger signal from the first logic circuit (L1) can be applied by means of a trigger signal line (TS1), said line being a part of the design of the first programmable gate array (G1), having the method steps:
When programming the first monitor circuit (D1), applying the first external trigger signal input (TE1) to a signal input pin (PI) of the first programmable gate array (G1), to which a trigger signal routed outside of the first programmable gate array (G1) by means of a bus (B) or a signal line of the computer system (CS) can be applied;
When programming the second monitor circuit, applying the second external trigger signal input (TE2) to a signal input pin (PI) of the second programmable gate array (G2) to which a trigger signal routed outside of the second programmable gate array (G2) by means of a bus (B) or a signal line of the computer system (CS) can be applied;
setting up the first internal trigger signal input (TI1) as a first trigger signal input by programming a first trigger signal line (TS1) applying a signal from the first logic circuit (L1) to the first internal trigger signal input (TI1) in the first programmable gate array (G1) without changing the first logic circuit (L1).

5. The method according to claim 4, having the method step:
programming the first trigger signal line (TS1) by means of partial reconfiguration.

6. The method according to claim 5, having the following method steps for programming the first trigger signal line (TS1) :
- expanding the netlist of the first programmable gate array (G1) to add the first trigger signal line (TS1);
- blocking the design of the first programmable gate array (G1);
- creating a new design of the first programmable gate array (G1) corresponding to the expanded netlist of the first programmable gate array (G1), taking into consideration the blocking of the design of the first programmable gate array (G1) ;
- identifying the first trigger signal line (TS1) in the new design of the first programmable gate array (G1) by determining the difference of the new design of the first programmable gate array (G1) and the blocked design of the first programmable gate array (G1);
- programming the first trigger signal line (TS1) in the first programmable gate array (G1).

7. The method according to claim 1, wherein the computer system (CS) comprises further programmable gate arrays in addition to the first programmable gate array (G1) and the second programmable gate array (G2),
each of the further programmable gate arrays comprises a signal input pin connected to the first trigger signal output (TO1) by means of a bus (B) or a signal line of the computer system (CS) such that the second trigger signal is present at the corresponding signal input pin,
and the signal propagation time of the second trigger signal to any signal input pin of any one of the further programmable gate arrays is no greater than the signal propagation time to the second trigger signal input.

8. The method according to claim 4, wherein the first trigger signal line (TS1) is programmed such that one of the following events generates the first trigger signal:
- a state machine (SM) implemented in the first logic circuit (L1) taking on a particular state;
- an edge of a signal from the first logic circuit (L1);
- a change in the value of a variable parameter in the program logic of the first logic circuit (L1);
- a mathematical comparison of a variable parameter in the program logic of the first logic circuit (L1) to a particular value being true;
- a logical combination of at least two mathematical comparisons of a variable parameter in the program logic of the first logic circuit (L1) to a corresponding particular value being true; or
- a logical combination of at least two of the events listed above being true.

9. The method according to any one of the preceding claims, wherein the programming of the first signal line (SI1) and the second signal line (SI2), particularly also the programming of the first trigger signal line (TS1), takes place by means of remote access to the computer system (CS).

10. The method according to any one of the preceding claims, having the method step: configuring the first monitor circuit (D1), particularly by means of remote access to the computer system (CS), such that the first monitor circuit (D1) interprets a signal present at the first trigger signal input (TI1) as a first trigger signal when one of the events listed in claim 8 occurs.

## Revendications

1. Procédé pour le débogage de la logique de programme d'un système d'ordinateur (CS), dans lequel un temps système global est défini et qui comprend au moins un premier réseau de portes (G1) programmable, par exemple un premier FPGA, et un deuxième réseau de portes (G2) programmable, par exemple un deuxième FPGA,
comprenant les étapes de procédé suivantes : programmer un premier circuit logique (L1) sur le premier réseau de portes (G1) programmable,
programmer un deuxième circuit logique (L2) sur le deuxième réseau de portes (G2) programmable,
programmer un premier circuit de surveillance (D1) qui est communicativement isolé du premier circuit logique (L1), qui comprend une première entrée de signaux (S1), une première entrée de signaux de déclenchement (TI1) et une première sortie de signaux de déclenchement (TO1) et est configuré pour, à la suite d'un signal de déclenchement présent à la première entrée de signaux de déclenchement (TI1), lire et mémoriser sur le premier réseau de portes (G1) programmable une valeur de signal d'un signal présent à la première entrée de signaux (S1) ; programmer un deuxième circuit de surveillance (D2) qui est communicativement isolé du deuxième circuit logique (L2), qui comprend une deuxième entrée de signaux (S2), une deuxième entrée de signaux de déclenchement (TE2) et est configuré pour, à la suite d'un signal de déclenchement présent à la deuxième entrée de signaux de déclenchement (TE2), lire et mémoriser sur le deuxième réseau de portes (G2) programmable une valeur de signal d'un signal présent à la deuxième entrée de signaux (S2) ;
lors de la programmation du premier circuit de surveillance (D1), appliquer la première sortie de signaux de déclenchement (TO1) à une broche de sortie de signaux (PO) du premier réseau de portes (G1) programmable, qui est reliée à la deuxième entrée de signaux de déclenchement via un bus (B) ou une ligne de signaux du système d'ordinateur (CS) ;
programmer une première ligne de signaux (SI1), qui applique un signal provenant du premier circuit logique (L1) à la première entrée de signaux (S1) dans le premier réseau de portes (G1) programmable sans modification du premier circuit logique (L1) ;
programmer une deuxième ligne de signaux (SI2), qui applique un signal provenant du deuxième circuit logique (L2) à la deuxième entrée de signaux (S2) dans le deuxième réseau de portes (G2) programmable sans modification du deuxième circuit logique (L2) ; et
générer un premier signal de déclenchement appliqué à la première entrée de signaux de déclenchement (TI1), qui amène le premier circuit de surveillance (D1) à lire et à mémoriser une première valeur de signal à partir de la première entrée de signaux (S1) ;
**caractérisé en ce que** le premier circuit de surveillance (D1) et le deuxième circuit de surveillance (D2) sont tous deux configurés pour lire le temps système global ;
le premier circuit de surveillance (D1) est configuré pour, à la suite du premier signal de déclenchement appliqué à la première entrée de signaux de déclenchement (TI1), déterminer un instant du temps système global qui se situe dans le futur, dont le décalage dans le temps par rapport au présent correspond au moins au temps de propagation du signal du deuxième signal de déclenchement à la deuxième entrée de signaux de déclenchement (TE2) ;
le premier circuit de surveillance (D1) est configuré pour, à la suite du signal de déclenchement appliqué à la première entrée de signaux de déclenchement (TI1), générer un deuxième signal de déclenchement appliqué à la deuxième entrée de signaux de déclenchement (TI2), à partir duquel l'instant peut être lu, et pour le sortir via la première sortie de signaux de déclenchement (TO1) ;
le deuxième circuit de surveillance (D2) est configuré pour lire l'instant à partir du deuxième signal de déclenchement ;
le premier circuit de surveillance (D1) est configuré pour lire et mémoriser la première valeur de signal du premier signal appliqué à cet instant à la première entrée de signaux (S1) ; et
le deuxième circuit de surveillance (D2) est configuré pour lire et mémoriser la deuxième valeur de signal du deuxième signal appliqué à cet instant à la deuxième entrée de signaux (S2).

2. Procédé selon la revendication 1, avec l'étape de procédé :
programmer la première ligne de signaux (S1) et la deuxième ligne de signaux (S2) par reconfiguration partielle.

3. Procédé selon la revendication 2, avec les étapes de procédé suivantes pour la programmation de la première ligne de signaux (SI1) :
- élargir la liste de réseau du premier réseau de portes (G1) programmable par la première ligne de signaux (SI1) ;
- bloquer la conception du premier réseau de portes (G1) programmable ;
- créer une nouvelle conception du premier réseau de portes (G1) programmable correspondant à la liste de réseau élargie du premier réseau de portes (G1) programmable compte tenu du blocage de la conception du premier réseau de portes (G1) programmable ;
- identifier la première ligne de signaux (SI1) dans la nouvelle conception du premier réseau de portes (G1) programmable par détermination de la différence entre la nouvelle conception du premier réseau de portes (G1) programmable et la conception bloquée du premier réseau de portes (G1) programmable ;
- programmer la première ligne de signaux (SI1) dans le premier réseau de portes programmable ;
et avec les étapes de procédé suivantes pour la programmation de la deuxième ligne de signaux (SI2) :
- élargir la liste de réseau du deuxième réseau de portes (G2) programmable par la deuxième ligne de signaux (SI2) ;
- bloquer la conception du deuxième réseau de portes (G2) programmable ;
- créer une nouvelle conception du deuxième réseau de portes (G2) programmable correspondant à la liste de réseau élargie du deuxième réseau de portes (G2) programmable compte tenu du blocage de la conception du deuxième réseau de portes (G2) programmable ;
- identifier la deuxième ligne de signaux (SI2) dans la nouvelle conception du deuxième réseau de portes (G2) programmable par détermination de la différence entre la nouvelle conception du deuxième réseau de portes (G2) programmable et la conception bloquée du deuxième réseau de portes (G2) programmable ;
- programmer la deuxième ligne de signaux (SI2) dans le deuxième réseau de portes (G2) programmable ;

4. Procédé selon la revendication 1, dans lequel le premier circuit de surveillance (D1) comprend une première entrée de signaux de déclenchement externe (TE1) ;
le deuxième circuit de surveillance comprend une deuxième entrée de signaux de déclenchement externe (TE2) ;
et le premier circuit de surveillance comprend une première entrée de signaux de déclenchement interne (TI1) à laquelle peut être appliqué un signal de déclenchement provenant du premier circuit logique (L1) au moyen d'une ligne de signaux de déclenchement (TS1) qui fait partie de la conception du premier réseau de portes (G1) programmable, avec les étapes de procédé :
appliquer la première entrée de signaux de déclenchement externe (TE1) à une broche d'entrée de signaux (PI) du premier réseau de portes (G1) programmable, à laquelle peut être appliqué, lors de la programmation du premier circuit de surveillance (D1), un signal de déclenchement transporté hors du premier réseau de portes (G1) programmable via un bus (B) ou une ligne de signaux du système d'ordinateur (CS) ;
appliquer la deuxième entrée de signaux de déclenchement externe (TE2) à une broche d'entrée de signaux (PI) du deuxième réseau de portes (G2) programmable, à laquelle peut être appliqué, lors de la programmation du deuxième circuit de surveillance (D2), un signal de déclenchement transporté hors du deuxième réseau de portes (G2) programmable via un bus (B) ou une ligne de signaux du système d'ordinateur (CS) ;
configurer la première entrée de signaux de déclenchement interne (TI1) en tant que première entrée de signaux de déclenchement par programmation d'une première ligne de signaux de déclenchement (TS1) qui applique un signal provenant du premier circuit logique (L1) à la première entrée de signaux de déclenchement interne (TI1) dans le premier réseau de portes (G1) programmable sans modification du premier circuit logique (L1).

5. Procédé selon la revendication 4, avec l'étape de procédé :
programmer la première ligne de signaux de déclenchement (TS1) par reconfiguration partielle.

6. Procédé selon la revendication 5, avec les étapes de procédé suivantes pour la programmation de la première ligne de signaux de déclenchement (TS1) :
- élargir la liste de réseau du premier réseau de portes (G1) programmable par la première ligne de signaux de déclenchement (TS1) ;
- bloquer la conception du premier réseau de portes (G1) programmable ;
- créer une nouvelle conception du premier réseau de portes (G1) programmable correspondant à la liste de réseau élargie du premier réseau de portes (G1) programmable compte tenu du blocage de la conception du premier réseau de portes (G1) programmable ;
- identifier la première ligne de signaux de déclenchement (TS1) dans la nouvelle conception du premier réseau de portes (G1) programmable par détermination de la différence entre la nouvelle conception du premier réseau de portes (G1) programmable et la conception bloquée du premier réseau de portes (G1) programmable ;
- programmer la première ligne de signaux de déclenchement (TS1) dans le premier réseau de portes (G1) programmable ;

7. Procédé selon la revendication 1, dans lequel le système d'ordinateur (CS) comprend, outre le premier réseau de portes (G1) programmable et le deuxième réseau de portes (G2) programmable, des réseaux de portes programmables supplémentaires,
chacun des réseaux de portes programmables supplémentaires comprend une broche d'entrée de signaux qui est connectée à la première sortie de signaux de déclenchement (TO1) via un bus (B) ou une ligne de signaux du système d'ordinateur (CS) de sorte que le deuxième signal de déclenchement est appliqué à la broche d'entrée de signaux respective,
et le temps de propagation de signal du deuxième signal de déclenchement vers aucune broche d'entrée de signaux de l'un des réseaux de portes programmables supplémentaires est supérieur au temps de propagation de signal vers la deuxième entrée de signaux de déclenchement.

8. Procédé selon la revendication 4, dans lequel la première ligne de signaux de déclenchement (TS1) est programmée de sorte que l'un des événements suivants génère le premier signal de déclenchement :
- la prise d'un état déterminé d'un automate à états (SM) mise en œuvre dans le premier circuit logique (L1) ;
- un front d'un signal provenant du premier circuit logique (L1) ;
- une variation de la valeur d'une grandeur variable dans la logique de programme du premier circuit logique (L1) ;
- la véracité d'une comparaison mathématique d'une grandeur variable dans la logique de programme du premier circuit logique (L1) avec une valeur déterminée ;
- la véracité d'une mise en relation logique d'au moins deux comparaison mathématiques d'une grandeur variable dans la logique de programme du premier circuit logique (L1) avec respectivement une valeur déterminée ; ou
- la véracité d'une mise en relation logique d'au moins deux des événements énumérés précédemment.

9. Procédé selon l'une quelconque des revendications précédentes, dans lequel la programmation de la première ligne de signaux (SI1) et de la deuxième ligne de signaux (SI2), en particulier en outre la programmation de la première ligne de signaux de déclenchement (TS1), est effectuée par accès à distance au système d'ordinateur (CS).

10. Procédé selon l'une quelconque des revendications précédentes, avec l'étape de procédé : configurer le premier circuit de surveillance (D1), en particulier par accès à distance au système d'ordinateur (CS), de sorte que le premier circuit de surveillance (D1) interprète un signal appliqué à la première entrée de signaux de déclenchement (TI1) en tant que premier signal de déclenchement à l'occurrence de l'un des événements énumérés dans la revendication 8.
